# EUROPEAN PATENT SPECIFICATION

(11) **EP 2 913 918 B1**
(45) Date of publication and mention of the grant of the patent: **11.09.2019**
(21) Application number: 13849735.9
(22) Date of filing: 26.07.2013
(51) Int. Cl.: H02P 27/06, H02P 21/00, H02P 27/04, H02P 29/024

(54) **OPEN PHASE DETECTION METHOD AND POWER CONVERSION DEVICE**
VERFAHREN ZUR ERKENNUNG OFFENER PHASEN UND STROMWANDLERVORRICHTUNG
PROCÉDÉ DE DÉTECTION DE COUPURE DE PHASE ET DISPOSITIF DE CONVERSION DE PUISSANCE

(30) Priority: 24.10.2012 JP 2012234283
(43) Date of publication of application: 02.09.2015
(73) Proprietor: Hitachi Industrial Equipment Systems Co., Ltd., Chiyoda-ku Tokyo 101-0022 (JP)
(72) Inventor: ONUMA, Yuusaku, Tokyo 101-0022 (JP)
(74) Representative: Strehl Schübel-Hopf & Partner
(86) International application number: PCT/JP2013/070277
(87) International publication number: WO 2014/064981

(56) References cited:
- JP-A- H09 312 928
- JP-A- 2005 057 817
- JP-A- 2006 025 526
- JP-A- 2008 092 690
- JP-A- 2011 139 559
- JP-A- 2011 139 559
- US-A1- 2004 104 704

## Description

### Technical Field

The present invention relates to a fault phase detection method and a power conversion device.

### Background Art

In order to drive an AC motor, such as an induction motor or a synchronous motor, a power conversion device that converts DC power into AC power is used.

If failure such as disconnection of one phase (fault phase) occurs in wires between a power conversion device and an AC motor, a current hardly flows through a fault phase. For this reason, an excessive current flows through phases without fault, and there is a possibility that a power conversion device or an AC motor is burned. Therefore, when a fault occurs, in order to prevent an excessive current from flowing through the power conversion device or the AC motor, it is desirable that a fault phase is quickly detected and an output of the power conversion device is blocked.

In the related art, PTL 1 discloses a method (Claim 1 of Claims) in which "in a power conversion control device that performs a variable speed drive while performing a vector control of a three phase AC motor, a rotation angle of the AC motor is measured when an absolute value of each phase output current of the power conversion control device is equal to or smaller than a threshold determined in advance, and when the measured rotation angle exceeds an angle set value determined in advance, at least one phase of each phase output of the power conversion control device is determined to be a fault".

In addition, PTL 2 discloses a method (Claim 1 of Claims) in which "an inverter device that drives at least one AC motor or more, means for obtaining a current value flowing into an AC motor, means for performing a coordinate conversion of a current value flowing into an AC motor, and means for generating a voltage command and a frequency command with respect to the inverter device based on the current value obtained from the means for performing the coordinate conversion, are provided, and a current value that is used for a fault phase detection is measured by detecting frequency components of two times the frequency command with respect to the inverter device, from a current value obtained from the means for performing the coordinate conversion, and when the measured value is greater than a determination value, a fault phase of the inverter device is detected".

A further related power conversion device is disclosed in the document US2004104704. The device disclosed therein is operated by maintaining the voltage at constant and always monitoring the current/voltage phases so as to maintain a constant phase difference, without the motor axis position being predicted.

### Citation List

### Patent Literature

PTL 1: JP-A-2008-61294
PTL 2: JP-A-2011-139559

### Summary of Invention

### Technical Problem

A fault phase detection method described in PTL 1 needs a rotation angle measuring instrument for measuring a rotation angle of an AC motor.

In addition, a fault phase detection method described in PTL 2 does not need a rotation angle measuring instrument, but in a case where a load pulsates by two times the frequency command, since frequency components of two times the frequency command occur in a current value that is used for a fault phase determination, there is a possibility of a false detection.

Therefore, an object of the present invention is to provide a fault phase detection method in which a rotation angle measuring instrument for measuring a rotation angle of an AC motor is not required, and although a load pulsates, a false detection is not performed.

### Solution to Problem

The present invention is defined in claims 1 and 7 and includes a plurality of means for solving the problems, but for example, is a power conversion device that includes a switching circuit that converts a DC power into an AC power; a current detector that detects a current flowing from the switching circuit to an AC motor; a coordinate converter that converts a current detected by the current detector into a current, which rotates at an arbitrary speed, on coordinates; a phase calculator that calculates a current phase on rotation coordinates from a current on rotation coordinates output from the coordinate converter; and a fault phase determination unit that determines a fault phase based on a current phase on rotation coordinates, that is output from the phase calculator.

### Advantageous Effects of Invention

According to the present invention, it is possible to realize a fault phase detection in which a rotation angle measuring instrument for measuring a rotation angle of an AC motor is not required, and although a load pulsates, a false detection is not performed.

### Brief Description of Drawings

Fig. 1 is an example of an embodiment configuration according to Example 1.
Fig. 2 is an example of a current vector in a normal mode and a V phase fault phase mode.
Fig. 3 is an example of a current phase waveform on rotation coordinates in a normal mode and a V phase fault phase mode.
Fig. 4 is an example of a current waveform and a current phase waveform on rotation coordinates at the time of a constant load and at the time of load pulsation.
Fig. 5 is an example of an embodiment configuration according to Example 2.
Fig. 6 is an example of an embodiment configuration according to Example 3.

### Description of Embodiments

Hereinafter, Examples of the present invention will be described with reference to the drawings. In addition, in the following description, the same symbols and reference numerals are attached to common configuration elements in each figure, and a repeated description thereof will be omitted.

### Example 1

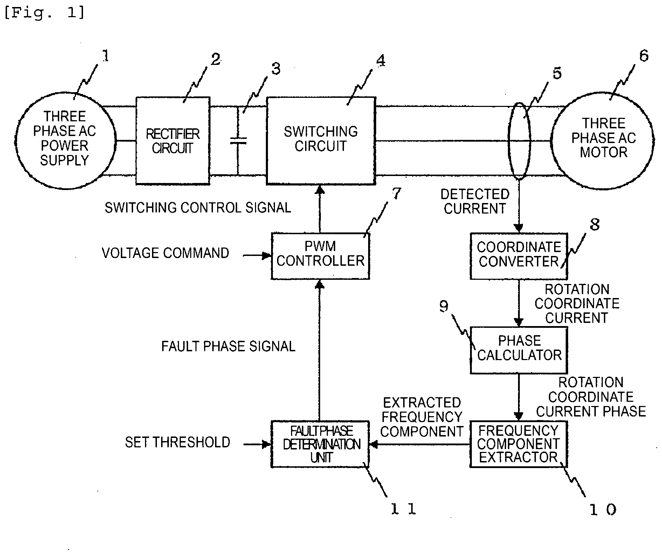

Fig. 1 is an example of an embodiment configuration according to Example 1.

A three phase AC voltage input by a three phase AC power supply 1 is rectified by a rectifier circuit 2, and is smoothed by a smoothing circuit 3.

A switching circuit 4 converts the voltage (DC voltage) smoothed by the smoothing circuit 3 into a three phase AC voltage, and the voltage is applied to a three phase AC motor 6.

A PWM controller 7 outputs a control signal that controls on and off of the switching circuit 4 in such a manner that a voltage based on a voltage command is applied to the three phase AC motor 6.

A current detector 5 detects a three phase AC current flowing through the three phase AC motor 6. In a case where only two phases are detected, since the sum of the three phase alternate currents is zero, the remaining one phase may be calculated. In addition, a shunt resistor is provided on a positive polarity side or a negative polarity side of the smoothing circuit 3, and a three phase AC current may be estimated from a current flowing through the shunt resistor.

A coordinate converter 8 converts a current (three phase AC current) detected by the current detector 5 into a current (rotation coordinate current) on coordinates that rotates at an arbitrary speed. In general, a rotation speed of rotation coordinates is set in such a manner that coordinates rotate at the same speed as a frequency of a voltage that is applied to the AC motor 6. In such rotation coordinates, an axis that serves as a reference is often referred to as d axis, and an axis orthogonal to the d axis is often referred to as q axis.

A phase calculator 9 calculates a current phase (rotation coordinate current phase) on rotation coordinates from a rotation coordinate current. For example, the rotation coordinate current phase can be calculated by using an arc tangent of a trigonometric function, from a current on the axis (d axis) that serves as a reference, and a current on the axis (q axis) orthogonal to a reference axis.

A frequency component extractor 10 extracts arbitrary frequency components (extracted frequency components) of a rotation coordinate current phase. Arbitrary frequency components can be extracted by, for example, Fourier transform. In a case of more than one rotation coordinate current phase, the frequency components may be extracted from each. In addition, the frequency components to be extracted may be in a plurality of frequency bands.

A fault phase determination unit 11 performs fault phase determination using an input value (for example, extracted frequency components) and a threshold set in advance, and outputs a fault phase signal. In addition, the threshold may be changed depending on a drive situation of the three phase AC motor 6, for example, a frequency, a voltage, a current, or the like. In addition, the threshold may be changed by a signal or setting provided from outside. In case of more than one input value, a threshold is set with respect to each input value, and a fault phase may be determined by at least one combination.

If a fault phase signal is input to the PWM controller 7, the PWM controller 7 forcibly switches off all switches of the switching circuit 4, and blocks an output of the switching circuit 4 or outputs alarm information.

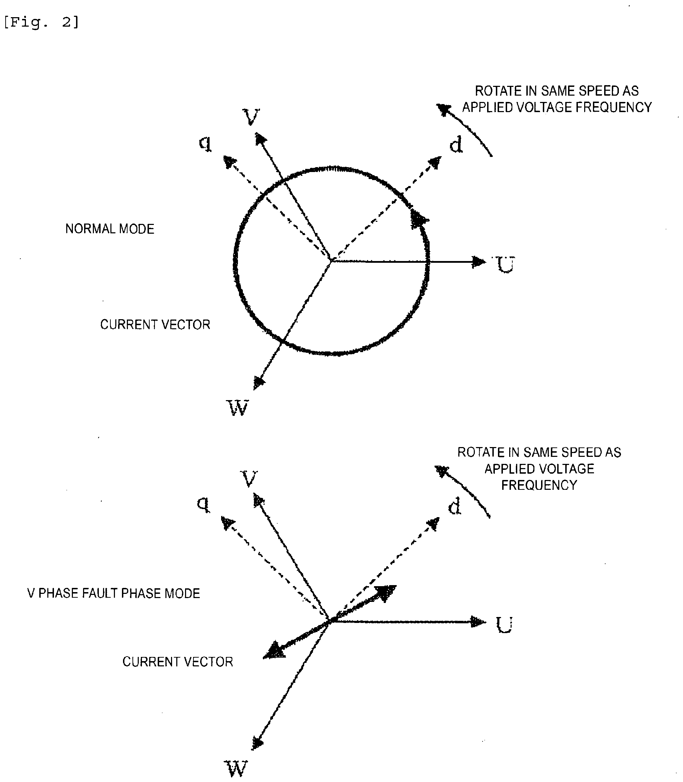

Fig. 2 is an example of a current vector in a normal mode and a V phase fault phase mode. In Fig. 2, an axis that serves as a reference is referred to as d axis, and an axis orthogonal to the d axis is referred to as q axis. In addition, a rotation speed of rotation coordinates is set to the same speed as the frequency of a voltage that is applied to the AC motor 6. Meanwhile, hereinafter, a normal mode is compared to a V phase fault phase mode, but even in a case of U phase or W phase fault phase, V phase being replaced with U phase or W phase, can be considered in the same manner.

A current vector in a normal mode draws a circle, and rotation speed thereof is the same speed as the frequency of the voltage that is applied to the AC motor 6. Meanwhile, a current vector in a case where the V phase is a fault phase draws a straight line orthogonal to the V phase because a current does not flow in the V phase, and can move back and forth on a straight line at the same speed as the frequency of the voltage that is applied to the AC motor 6.

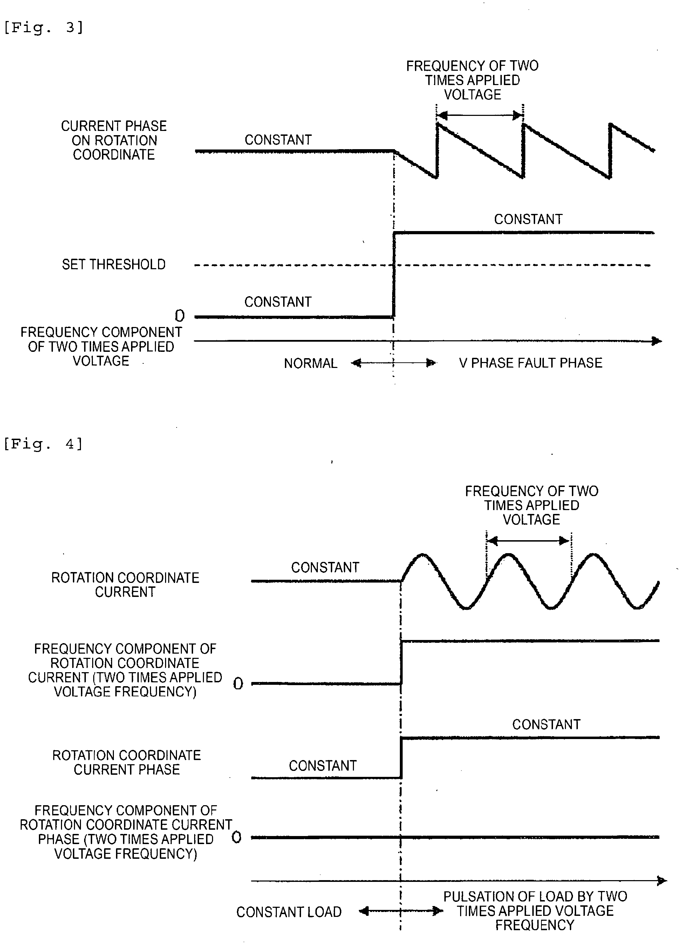

Fig. 3 is an example of current phase waveform on rotation coordinates in a normal mode and in a V phase fault phase mode.

Since a current vector in a normal mode draws a circle at the same speed as a rotation speed of rotation coordinates, a current phase from the d axis, that is, a rotation coordinate current phase is constant. Meanwhile, since a current vector in a V phase fault phase mode draws a straight line orthogonal to a V phase at the same speed as a rotation speed of rotation coordinates, the rotation coordinate current phase pulsates at a speed of two times the rotation speed of rotation coordinates, that is, at a frequency of two times the voltage that is applied to the AC motor 6.

In this way, in the rotation coordinate current phase, frequency components of two times the voltage that is applied to the AC motor 6 are generated only at the time of a fault phase. The frequency components are extracted by the frequency component extractor 10, and in a case where the frequency components exceed the set threshold by the fault phase determination unit 11, it is possible to determine a fault phase.

In addition, without passing through the frequency component extractor 10, the same effect is obtained also by inputting the rotation coordinate current phase to the fault phase determination unit 11.

Fig. 4 is an example of a current waveform and a current phase waveform on rotation coordinates at the time of a constant load and at the time of load pulsation.

In a case where a load is constant, a current on rotation coordinates that is output from the coordinate converter 8 is constant, but if the load pulsates by a frequency of two times the voltage that is applied to the AC motor 6, a current on rotation coordinates pulsates at the same frequency, and the components of two times the applied voltage frequency have a value other than zero. Thus, if a fault phase is determined using the frequency components of the current on rotation coordinates, there is a case where step-out and false detection is performed in a case where a load pulsates. In contrast to this, the current phase on rotation coordinates is constant even in a case where the load pulsates, and the components of two times the applied voltage frequency are zero. Thus, by using the frequency components of the current phase on rotation coordinates, a false detection is not performed even in a case where the load pulsates, and it is possible to perform a constant fault phase detection.

### Example 2

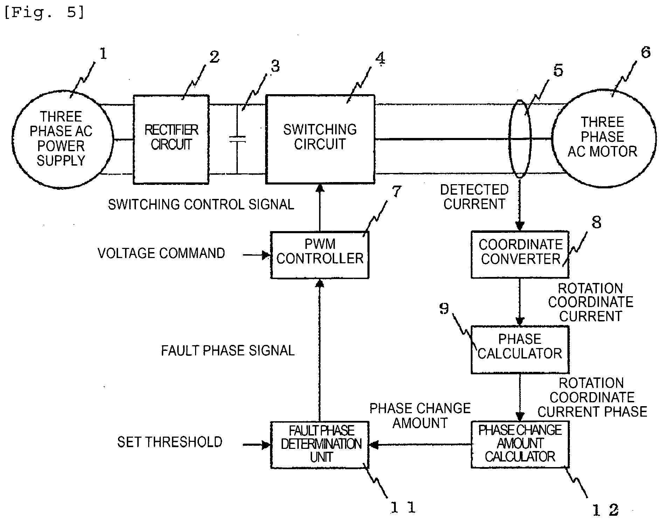

Fig. 5 is an example of an embodiment configuration according to Example 2.

A phase change amount calculator 12 calculates a phase change amount per an arbitrary time from a rotation coordinate current phase that is output by the phase calculator 9. The phase change amount can be calculated by, for example, differentiation.

As described above, the current phase on rotation coordinates in a normal mode is constant, but the current phase on rotation coordinates in a V phase fault phase mode pulsates . For this reason, the phase change amount is zero in a normal mode, and is a value other than zero in a V phase fault phase mode.

In this way, the phase change amount of the rotation coordinate current has a value other than zero only in a fault phase. The phase change amount is calculated by the phase change amount calculator 12, and in a case where the phase change amount exceeds the set threshold by the fault phase determination unit 11, it is possible to determine a fault phase.

### Example 3

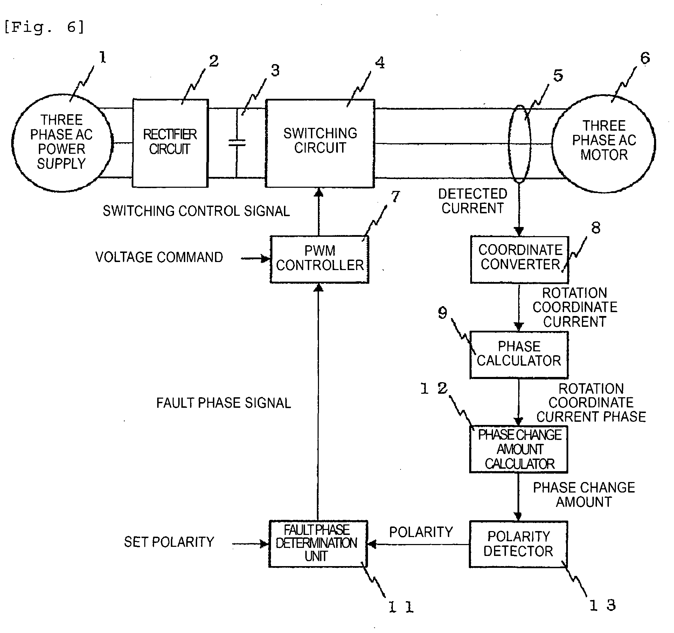

Fig. 6 is an example of an embodiment configuration of Example 3.

A polarity detector 13 detects a polarity of a phase change amount of a rotation coordinate current. The polarity can be detected by comparing with, for example, zero.

As described above, a phase change amount of the rotation coordinate current is calculated by the phase change amount calculator 12, is zero in a normal mode, but the phase change amount is a value other than zero in a V phase fault phase mode. At this time, a polarity of the phase change amount of the rotation coordinate current is a different polarity from the phase change amount of a voltage that is applied to the AC motor 6.

Thus, for example, the fault phase determination unit 11 compares a polarity that is set in advance, such as a polarity of a phase change amount of a voltage that is applied to the AC motor 6, with a polarity that is detected by the polarity detector 13, and in a case where both polarities are different from each other, there is a possibility of being determined to be a fault phase.

In addition, a part of or all of each configuration, each function, each processing unit, each processing means, or the like that is described above may be realized by hardware, by designing an integrated circuit or the like. In addition, each configuration, each function, or the like that is described above may be realized by software in which a processor interprets and executes a program that realizes each function. Information, such as a program, a table, or a file that realizes each function can be stored in a recording device, such as a memory, a hard disc, or a solid state drive (SSD), or a recording medium, such as an IC card, an SD card, or a DVD.

In addition, control lines or information lines that are considered to be required for explanation are described, and do not necessarily indicate all control lines or information lines that are required for products. Actually, it may be considered that substantially all the configurations are connected to each other.

### Reference Signs List

- 1: three phase AC power supply
- 2: rectifier circuit
- 3: smoothing circuit
- 4: switching circuit
- 5: current detector
- 6: three phase AC motor
- 7: PWM controller
- 8: coordinate converter
- 9: phase calculator
- 10: frequency component extractor
- 11: fault phase determination unit
- 12: phase change amount calculator
- 13: polarity detector

## Claims

1. A power conversion device comprising:
a switching circuit (1, 2, 3) that converts a DC power into an AC power;
a current detector (5) that detects a current flowing from the switching circuit to an AC motor;
a coordinate converter (8) that converts a current detected by the current detector (5) into a current, which rotates at an arbitrary speed, on coordinates; **characterized by** a phase calculator (9) configured to calculate a current phase on rotation coordinates from a current on rotation coordinates output from the coordinate converter (8); and
a fault phase determination unit (11) configured to determine a fault
phase based on said current phase on rotation coordinates output from the phase calculator (9),
the power conversion device further comprising:
a frequency component extractor (10) configured to extract, as said input value, arbitrary frequency components from a current phase on rotation coordinates output from the phase calculator (9),
wherein the fault phase determination unit (11) configured to detect a fault phase based on the arbitrary frequency components extracted by the frequency component extractor (10).

2. The power conversion device according to Claim 1, further comprising:
a phase change amount calculator (12) configured to calculate, as said input value, a phase change amount from a current phase on rotation coordinates output from the phase calculator (9), wherein the fault phase determination unit (11) configured to detect a fault phase based on a phase change amount calculated by the phase change amount calculator (12).

3. The power conversion device according to Claim 1, further comprising:
a phase change amount calculator (12) configured to calculate, as said input value, a phase change amount from a current phase on rotation coordinates output from the phase calculator (9); and
a polarity detector (13) configured to detect a polarity of a phase change amount calculated by the phase change amount calculator (12),
wherein the fault phase determination unit (11) configured to detect a fault phase based on a polarity of a phase change amount detected by the polarity detector (13).

4. The power conversion device according to Claim 1,
wherein the fault phase determination unit (11) configured to detect a fault phase by comparing the extracted arbitrary frequency components with a threshold determined in advance.

5. The power conversion device according to Claim 1,
wherein in a case where a fault phase is detected by the fault phase determination unit (11), the fault phase determination unit (11) configured to block an output of the switching circuit (4)

6. The power conversion device according to Claim 1,
wherein in a case where a fault phase is detected by the fault phase determination unit (11), alarm information is output.

7. A fault phase detection method comprising:
a switching step of converting a DC power into an AC power;
a current detection step of detecting a current flowing through an AC motor (6) which is switched by the switching step;
a coordinate conversion step of converting a current detected by the current detection step into a current, which rotates at an arbitrary speed, on coordinates;
a phase calculation step of calculating a current phase on rotation coordinates from a current on rotation coordinates output from the coordinate conversion step; and
a fault phase determination step of determining a fault phase based on a current phase on rotation coordinates output from the phase calculation step,
the fault phase detection method further comprising:
a frequency component extraction step of extracting arbitrary frequency components from a current phase on rotation coordinates output by the phase calculation step,
wherein in the fault phase determination step, a fault phase is detected based on the arbitrary frequency components extracted by the frequency component extraction step.

8. The fault phase detection method according to Claim 7, further comprising:
a phase change amount calculation step of calculating a phase change amount from a current phase on rotation coordinates output by the phase calculation step,
wherein in the fault phase determination step, a fault phase is detected based on a phase change amount calculated by the phase change amount calculation step.

9. The fault phase detection method according to Claim 7, further comprising:
a phase change amount calculation step of calculating a phase change amount from a current phase on rotation coordinates output by the phase calculation step; and
a polarity detection step of detecting a polarity of a phase change amount calculated by the phase change amount calculation step,
wherein in the fault phase determination step, a fault phase is detected based on a polarity of a phase change amount detected by the polarity detection step.

10. The fault phase detection method according to Claim 7, wherein the fault phase detection step detects a fault phase by comparing with a threshold determined in advance.

11. The fault phase detection method according to Claim 7, wherein in a case where a fault phase is detected by the fault phase detection step, an output of the switching step is blocked.

12. The fault phase detection method according to Claim 7, wherein in a case where a fault phase is detected by the fault phase detection step, alarm information is output.

## Patentansprüche

1. Leistungsumwandlungsvorrichtung, umfassend:
einen Umschalt-Schaltkreis (1, 2, 3), der eine Gleichstromleistung in eine Wechselstromleistung umwandelt;
einen Stromdetektor (5), der einen Strom erfasst, der von dem Schaltkreis zu einem Wechselstrommotor fließt;
einen Koordinatenwandler (8), der einen vom Stromdetektor (5) erfassten Strom in einen Strom in Winkelkoordinaten mit einer beliebigen Rotationsgeschwindigkeit umwandelt;
**gekennzeichnet durch** einen Phasenrechner (9), der dazu ausgelegt ist, eine Stromphase in Winkelkoordinaten aus einem Strom in Winkelkoordinaten zu berechnen, der von dem
Koordinatenwandler (8) ausgegeben wird; und
eine Fehlerphasenbestimmungseinheit (11), die dazu ausgelegt ist, eine Fehlerphase basierend auf der Stromphase in von dem Phasenrechner (9) ausgegebenen Winkelkoordinaten zu bestimmen,
wobei die Leistungsumwandlungsvorrichtung ferner umfasst:
einen Frequenzkomponenten-Extraktor (10), der dazu ausgelegt ist, als Eingangswert beliebige Frequenzkomponenten aus einer Stromphase in Winkelkoordinaten zu extrahieren, die vom Phasenrechner (9) ausgegeben wird,
wobei die Fehlerphasenbestimmungseinheit (11) dazu ausgelegt ist, eine Fehlerphase basierend auf den durch den Frequenzkomponenten-Extraktor (10) extrahierten beliebigen Frequenzkomponenten zu erfassen.

2. Die Leistungsumwandlungsvorrichtung nach Anspruch 1, ferner umfassend:
einen Phasenänderungsstärkenrechner (12), der dazu ausgelegt ist, als Eingangswert eine Phasenänderungsstärke aus einer Stromphase in Winkelkoordinaten zu berechnen, die vom Phasenrechner (9) ausgegeben wird,
wobei die Fehlerphasenbestimmungseinheit (11) dazu ausgelegt ist, eine Fehlerphase basierend auf einer Phasenänderungsstärke zu erfassen, der durch den Phasenänderungsstärkenrechner (12) berechnet wird.

3. Die Leistungsumwandlungsvorrichtung nach Anspruch 1, ferner umfassend:
einen Phasenänderungsstärkenrechner (12), der dazu ausgelegt ist, als Eingangswert eine Phasenänderungsstärke aus einer Stromphase in Winkelkoordinaten zu berechnen, die von dem Phasenrechner (9) ausgegeben wird; und
einen Polaritätsdetektor (13), der dazu ausgelegt ist, eine Polarität einer Phasenänderungsstärke zu erfassen, die von dem Phasenänderungsstärkenrechner (12) berechnet wird,
wobei die Fehlerphasenbestimmungseinheit (11) dazu ausgelegt ist, eine Fehlerphase basierend auf einer Polarität einer vom Polaritätsdetektor (13) erfassten Phasenänderungsstärke zu erfassen.

4. Die Leistungsumwandlungsvorrichtung nach Anspruch 1,
wobei die Fehlerphasenbestimmungseinheit (11) dazu ausgelegt ist, eine Fehlerphase durch Vergleichen der extrahierten beliebigen Frequenzkomponenten mit einem im Voraus bestimmten Schwellenwert zu erfassen.

5. Die Leistungsumwandlungsvorrichtung nach Anspruch 1,
wobei in einem Fall, in dem eine Fehlerphase durch die Fehlerphasenbestimmungseinheit (11) erfasst wird, die Fehlerphasenbestimmungseinheit dazu ausgelegt ist, einen Ausgang der Schaltkreise (4)zu blockieren.

6. Die Leistungsumwandlungsvorrichtung nach Anspruch 1,
wobei in einem Fall, in dem eine Fehlerphase durch die Fehlerphasenbestimmungseinheit (11) erfasst wird, Alarminformationen ausgegeben werden.

7. Fehlerphasenerkennungsverfahren, umfassend:
einen Schaltschritt zum Umwandeln einer Gleichstromleistung in eine Wechselstromleistung;
einen Stromerfassungsschritt zum Erfassen eines Stroms, der durch einen Wechselstrommotor (6) fließt, der durch den Schaltschritt geschaltet wird;
einen Koordinatenumwandlungsschritt zum Umwandeln eines durch den Stromerfassungsschritt erfassten Stroms in einen Strom in Winkelkoordinaten mit einer beliebigen Rotationsgeschwindigkeit;
einen Phasenberechnungsschritt zum Berechnen einer Stromphase in Winkelkoordinaten aus einem Strom in Winkelkoordinaten, der aus dem Koordinatenumrechnungsschritt ausgegeben wird; und
einen Fehlerphasenbestimmungsschritt zum Bestimmen einer Fehlerphase basierend auf einer Stromphase in Winkelkoordinaten,
die vom Phasenberechnungsschritt ausgegeben wird,
wobei das Fehlerphasenerkennungsverfahren ferner umfasst:
einen Schritt zum Extrahieren von Frequenzkomponenten, um beliebige Frequenzkomponenten aus einer Stromphase in Winkelkoordinaten zu extrahieren, die von dem Phasenberechnungsschritt ausgegeben wird,
wobei in dem Fehlerphasenbestimmungsschritt eine Fehlerphase basierend auf den durch den Frequenzkomponenten-Extraktionsschritt extrahierten beliebigen Frequenzkomponenten erfasst wird.

8. Fehlerphasenerkennungsverfahren nach Anspruch 7, ferner umfassend:
einen Phasenänderungsstärkenberechnungsschritt zum Berechnen einer Phasenänderungsstärke aus einer Stromphase in Winkelkoordinaten, die von dem Phasenberechnungsschritt ausgegeben wird,
wobei in dem Fehlerphasenbestimmungsschritt eine Fehlerphase basierend auf einer Phasenänderungsstärke erfasst wird, der durch den Phasenänderungsstärkenberechnungsschritt berechnet wird.

9. Fehlerphasenerkennungsverfahren nach Anspruch 7, ferner umfassend:
einen Phasenänderungsstärkenberechnungsschritt zum Berechnen einer Phasenänderungsstärke aus einer Stromphase in Winkelkoordinaten, die von dem Phasenberechnungsschritt ausgegeben wird; und
einen Polaritätserfassungsschritt zum Erfassen einer Polarität einer Phasenänderungsstärke, die durch den Phasenänderungsstärkenberechnungsschritt berechnet wird,
wobei in dem Fehlerphasenbestimmungsschritt eine Fehlerphase basierend auf einer Polarität einer Phasenänderungsstärke erfasst wird, die durch den Polaritätserfassungsschritt erfasst wird.

10. Das Fehlerphasenerkennungsverfahren nach Anspruch 7,
wobei der Fehlerphasenerfassungsschritt eine Fehlerphase durch Vergleichen mit einem im Voraus bestimmten Schwellenwert erfasst.

11. Das Fehlerphasenerkennungsverfahren nach Anspruch 7,
wobei in einem Fall, in dem eine Fehlerphase durch den Fehlerphasenerfassungsschritt erfasst wird, ein Ausgang des Schaltschritts blockiert wird.

12. Das Fehlerphasenerkennungsverfahren nach Anspruch 7,
wobei in einem Fall, in dem eine Fehlerphase durch den Fehlerphasenerfassungsschritt erfasst wird, Alarminformationen ausgegeben werden.

## Revendications

1. Dispositif de conversion d'énergie comprenant :
un circuit (1, 2, 3) de commutation qui convertit une énergie CC en une énergie CA ; un détecteur (5) de courant qui détecte un courant passant du circuit de commutation à un moteur en CA ;
un convertisseur (8) de coordonnées qui convertit un courant détecté par le détecteur (5) de courant en un courant, qui tourne à une vitesse arbitraire, sur des coordonnées ; **caractérisé par**
un calculateur (9) de phase configuré pour calculer une phase de courant sur des coordonnées de rotation à partir d'un courant sur des coordonnées de rotation délivrées en sortie du convertisseur (8) de coordonnées ; et
une unité (11) de détermination de phase défectueuse configurée pour déterminer une phase défectueuse sur la base de ladite phase de courant sur des coordonnées de rotation délivrées en sortie du calculateur (9) de phase,
le dispositif de conversion d'énergie comprenant en outre :
un extracteur (10) de composantes de fréquence configuré pour extraire, comme ladite valeur d'entrée, des composantes de fréquence arbitraires à partir d'une phase de courant sur des coordonnées de rotation délivrées en sortie du calculateur (9) de phase,
dans lequel l'unité (11) de détermination de phase défectueuse est configurée pour détecter une phase défectueuse sur la base des composantes de fréquence arbitraires extraites par l'extracteur (10) de composantes de fréquence.

2. Dispositif de conversion d'énergie selon la revendication 1, comprenant en outre :
un calculateur (12) de quantité de changement de phase configuré pour calculer, comme ladite valeur d'entrée, une quantité de changement de phase à partir d'une phase de courant sur des coordonnées de rotation délivrées en sortie du calculateur (9) de phase,
dans lequel l'unité (11) de détermination de phase défectueuse est configurée pour détecter une phase défectueuse sur la base d'une quantité de changement de phase calculée par le calculateur (12) de quantité de changement de phase.

3. Dispositif de conversion d'énergie selon la revendication 1, comprenant en outre :
un calculateur (12) de quantité de changement de phase configuré pour calculer, comme ladite valeur d'entrée, une quantité de changement de phase à partir d'une phase de courant sur des coordonnées de rotation délivrées en sortie du calculateur (9) de phase ; et
un détecteur (13) de polarité configuré pour détecter une polarité d'une quantité de changement de phase calculée par le calculateur (12) de quantité de changement de phase,
dans lequel l'unité (11) de détermination de phase défectueuse est configurée pour détecter une phase défectueuse sur la base d'une polarité d'une quantité de changement de phase détectée par le détecteur (13) de polarité.

4. Dispositif de conversion d'énergie selon la revendication 1,
dans lequel l'unité (11) de détermination de phase défectueuse est configurée pour détecter une phase défectueuse en comparant les composantes de fréquence arbitraires extraites avec un seuil déterminé au préalable.

5. Dispositif de conversion d'énergie selon la revendication 1,
dans lequel, dans le cas où une phase défectueuse est détectée par l'unité (11) de détermination de phase défectueuse, l'unité (11) de détermination de phase défectueuse est configurée pour bloquer une sortie du circuit (4) de commutation.

6. Dispositif de conversion d'énergie selon la revendication 1,
dans lequel, dans le cas où une phase défectueuse est détectée par l'unité (11) de détermination de phase défectueuse, une information d'alarme est délivrée en sortie.

7. Procédé de détection de phase défectueuse comprenant :
une étape de commutation pour convertir une énergie CC en une énergie CA ;
une étape de détection de courant pour détecter un courant traversant un moteur en CA (6) qui est commuté par l'étape de commutation ;
une étape de conversion de coordonnées pour convertir un courant détecté par l'étape de détection de courant en un courant, qui tourne à une vitesse arbitraire, sur des coordonnées ;
une étape de calcul de phase pour calculer une phase de courant sur des coordonnées de rotation à partir d'un courant sur des coordonnées de rotation délivrées en sortie de l'étape de conversion de coordonnées ; et
une étape de détermination de phase défectueuse pour déterminer une phase défectueuse sur la base d'une phase de courant sur des coordonnées de rotation délivrées en sortie de l'étape de calcul de phase,
le procédé de détection de phase défectueuse comprenant en outre :
une étape d'extraction de composantes de fréquence pour extraire des composantes de fréquence arbitraires à partir d'une phase de courant sur des coordonnées de rotation délivrées en sortie par l'étape de calcul de phase,
dans lequel à l'étape de détermination de phase défectueuse, une phase défectueuse est détectée sur la base des composantes de fréquence arbitraires extraites par l'étape d'extraction de composantes de fréquence.

8. Procédé de détection de phase défectueuse selon la revendication 7, comprenant en outre :
une étape de calcul de quantité de changement de phase pour calculer une quantité de changement de phase à partir d'une phase de courant sur des coordonnées de rotation délivrées en sortie par l'étape de calcul de phase,
dans lequel à l'étape de détermination de phase défectueuse, une phase défectueuse est détectée sur la base d'une quantité de changement de phase calculée par l'étape de calcul de quantité de changement de phase.

9. Procédé de détection de phase défectueuse selon la revendication 7, comprenant en outre :
une étape de calcul de quantité de changement de phase pour calculer une quantité de changement de phase à partir d'une phase de courant sur des coordonnées de rotation délivrées en sortie par l'étape de calcul de phase ; et
une étape de détection de polarité pour détecter une polarité d'une quantité de changement de phase calculée par l'étape de calcul de quantité de changement de phase,
dans lequel à l'étape de détermination de phase défectueuse, une phase défectueuse est détectée sur la base d'une polarité d'une quantité de changement de phase détectée par l'étape de détection de polarité.

10. Procédé de détection de phase défectueuse selon la revendication 7,
dans lequel l'étape de détection de phase défectueuse détecte une phase défectueuse en comparant avec un seuil déterminé au préalable.

11. Procédé de détection de phase défectueuse selon la revendication 7,
dans lequel, dans le cas où une phase défectueuse est détectée par l'étape de détection de phase défectueuse, une sortie de l'étape de commutation est bloquée.

12. Procédé de détection de phase défectueuse selon la revendication 7,
dans lequel, dans le cas où une phase défectueuse est détectée par l'étape de détection de phase défectueuse, une information d'alarme est délivrée en sortie.
